# FASCICULE DE BREVET EUROPEEN

(11) **EP 3 307 502 B1**
(45) Date de publication et mention de la délivrance du brevet: **31.07.2024**
(21) Numéro de dépôt: 16741077.8
(22) Date de dépôt: 13.06.2016
(51) Int. Cl.: B26D 7/20, B26F 1/38, B26D 7/08, B26D 5/00, B26D 5/02, B25J 11/00

(54) **INSTALLATION DE DÉCOUPE DE COUCHE MINCE DE MATÉRIAU SYNTHÉTIQUE**
EINHEIT ZUM SCHNEIDEN VON DÜNNFILMEN AUS SYNTHETISCHEM MATERIAL
UNIT FOR CUTTING THIN FILMS OF SYNTHETIC MATERIAL

(30) Priorité: 12.06.2015 FR 1555400
(43) Date de publication de la demande: 18.04.2018
(73) Titulaire: Centre Technique Des Industries Mecaniques, 60300 Senlis (FR)
(72) Inventeur: CALLENS, Clément, 44850 Ligné (FR); BORDELLIER, Franck, 44980 Sainte-Luce-sur-Loire (FR); DREANO, Elise, 44100 Nantes (FR)
(74) Mandataire: Fédit-Loriot
(86) Numéro de dépôt international: PCT/FR2016/051426
(87) Numéro de publication internationale: WO 2016/198810

(56) Documents cités:
- WO-A1-2006/045595
- WO-A1-88/04676
- CH-A2- 702 818
- DE-A1- 10 314 444
- DE-A1- 3 529 686
- FR-A5- 2 114 425
- JP-A- H04 341 839
- US-A1- 2008 273 951

## Description

La présente invention se rapporte à une installation de découpe de couche mince de matériau synthétique.

Un domaine d'application envisagé est notamment, mais non exclusivement, celui de la découpe de couche de matériau polymère, et plus précisément de matériau composite.

Des installations de découpe connues permettent de découper les couches de matériau textile en grande série en vue de fabriquer des vêtements à haute cadence.

Ces installations comprennent une table de travail plane percée d'orifices d'aspiration. Elles comprennent également un portique monté mobile en translation selon une première direction au-dessus de la table de travail, et une tête de découpe elle-même montée mobile en translation sur le portique selon une direction sensiblement perpendiculaire à la première direction. La tête de découpe comprend un sabot présentant une surface d'appui, et une lame coupante destinée à venir osciller en saillie de la surface d'appui.

Ainsi, des couches de matériau textile sont empilées sur la table de travail et on applique sur l'ensemble un film plastique étanche à l'air afin de pouvoir compresser l'ensemble de ces couches en venant aspirer l'air à travers les orifices d'aspiration de la table de travail. L'ensemble forme alors d'un seul bloc un tapis solidaire de la table de travail et plus aisé à découper.

L'installation comprend également un dispositif de commande permettant, à partir d'un programme de découpe prédéfini, outre de commander les oscillations la lame coupante, d'entraîner en translation simultanément le portique et la tête de découpe afin de pouvoir réaliser la découpe de formes prédéterminées de l'ensemble des couches compressées en un tapis. Il est alors réalisé, la découpe d'une pluralité de mêmes pièces de matériau textile.

Il a été imaginé d'utiliser une telle technique pour découper des pièces dans une couche de matériau polymère flexible. On pourra notamment se référer au document US 2008/0273951. Il y est décrit une table de travail perforée permettant de maintenir la couche flexible en position fixe sur la table de travail, ainsi qu'une tête de découpe présentant un sabot permettant d'éliminer les plis vers l'avant du sabot par rapport à son sens d'entraînement en mouvement.

Ces installations sont relativement complexes à mettre en oeuvre et partant, plus coûteuse.

Aussi, un problème qui se pose et que vise à résoudre la présente invention, est de fournir une installation de découpe plus simple permettant de découper des pièces dans des couches minces de matériau synthétique avec une haute productivité.

Dans ce but, il a été proposé une installation de découpe de couche mince de matériau synthétique, ladite installation comprenant, d'une part une table de travail pour recevoir une couche mince de matériau synthétique et d'autre part une tête de découpe comprenant un sabot présentant une surface d'appui glissante et un organe de découpe apte à venir s'étendre en saillie de ladite surface d'appui glissante, ladite surface d'appui glissante étant destinée à être appliquée contre ladite couche mince de matériau synthétique, tandis que ledit sabot est entraîné en mouvement sensiblement parallèlement à ladite table de travail selon des trajectoires prédéfinies pour pouvoir découper ladite couche mince de matériau synthétique. Ladite table de travail comporte un revêtement adhérent présentant un coefficient de frottement statique vis-à-vis dudit matériau synthétique, tandis que ladite surface d'appui glissante présente un coefficient de frottement dynamique vis-à-vis dudit matériau synthétique, inférieur audit coefficient de frottement statique, pour pouvoir maintenir ladite couche de matériau synthétique en position fixe contre ladite table de travail lorsque ledit sabot est entraîné en glissement sur ladite couche de matériau synthétique. En outre, ledit sabot est réalisé dans un matériau métallique. Ainsi, le sabot est réalisé dans un matériau plus rigide et la surface d'appui est traitée de manière à être plane et dépourvue d'aspérité afin que son coefficient de frottement dynamique vis-à-vis du matériau synthétique soit le plus faible possible.

Ainsi, une caractéristique de l'invention réside dans la mise en oeuvre, à la fois d'un revêtement adhérent sur la table de travail et d'un sabot présentant une surface d'appui glissante permettant le mouvement du sabot contre la couche mince de matériau synthétique, tandis que ce dernier est maintenu en position fixe sur la table de travail. On observera que le sabot exerce une pression suffisante sur la couche mince de matériau synthétique de manière à ce que cette dernière adhère au revêtement adhérent et soit maintenue en position fixe. Toutefois, cette pression ne peut excéder une valeur limite, au risque d'accroître les forces de frottement entre la surface d'appui glissante et la couche mince de matériau synthétique. Cette pression est par exemple comprise entre 7000 Pa et 18 000 Pa.

De la sorte, par la seule mise en oeuvre d'un revêtement adhérent, dont le coefficient de frottement statique vis-à-vis du matériau synthétique est supérieur à celui du coefficient de frottement dynamique de la surface d'appui glissante du sabot vis-à-vis du matériau synthétique, on entraîne le sabot à la surface de la couche de matériau synthétique afin de réaliser sa découpe, sans avoir à mettre en oeuvre des moyens d'aspiration relativement complexes et coûteux. Aussi, on choisira un revêtement adhérent et un sabot dont le coefficient de frottement statique et le coefficient de frottement dynamique sont respectivement les plus éloignés l'un de l'autre possible.

Selon une caractéristique de l'invention particulièrement avantageuse, ladite couche mince de matériau synthétique est une couche de matériau composite. Le matériau composite est fait d'une matrice en matériau polymère, dans laquelle sont noyés des fibres d'un matériau de renfort. La matrice est par exemple réalisée dans un matériau thermoplastique, en polyamide ou en polyéthylène et elle inclut, par exemple, des fibres longitudinales de verre ou bien de carbone.

Selon une autre caractéristique de l'invention particulièrement avantageuse, ledit revêtement adhérent est réalisé dans un élastomère. Le coefficient de frottement statique dépend essentiellement du revêtement adhérent et de son état de surface. Un matériau de type élastomère, par exemple un matériau silicone ou bien polyuréthane, présente d'excellentes qualités d'adhérence.

En outre, ledit sabot est réalisé, préférentiellement, dans un matériau métallique. Ainsi, le sabot est réalisé dans un matériau plus rigide et la surface d'appui est traitée de manière à être plane et dépourvue d'aspérité afin que son coefficient de frottement dynamique vis-à-vis du matériau synthétique soit le plus faible possible.

De plus, l'installation comprend en outre, et avantageusement, un dispositif de commande pour commander en mouvement ladite tête de découpe. Préférentiellement, ledit dispositif de commande comporte un robot présentant un bras distal portant ladite tête de découpe. De la sorte, grâce au robot, dont le bras distal est aisément commandable en dehors de l'espace de travail, il est aisé de venir accéder à la table de travail, soit pour venir y appliquer une couche mince de matériau synthétique, soit pour venir y retirer les pièces découpées dudit matériau synthétique.

Au surplus, ledit organe de découpe comprend une sonotrode et un transducteur. Ainsi, on met en oeuvre des ondes mécaniques ultrasonores pour provoquer la découpe de la couche de matériau synthétique, ce qui permet de réaliser des bords francs. En effet, lorsque l'on découpe des matériaux composites, les fibres qu'ils contiennent tendent à venir s'étendre en saillie des bords. Grâce à la coupe ultrason, ces bords sont sensiblement fondus et partant, réguliers.

Avantageusement, ladite surface d'appui glissante est de symétrie circulaire, tandis que ledit organe de découpe vient s'étendre en saillie au centre de ladite surface d'appui glissante. De la sorte, lorsque la tête de découpe est entraînée en rotation dans le plan, contre la couche de matériau synthétique, pour orienter l'organe de découpe dans le sens de la découpe, la distribution des efforts tangentiels qui s'exercent sur le matériau synthétique n'occasionnent aucun pli, ni irrégularité.

On observera que la surface d'appui glissante peut présenter d'autres formes.

Aussi, grâce à l'installation de découpe selon invention, il est possible de venir découper une couche de matériau synthétique présentant des zones de différentes épaisseurs.

Préférentiellement, ledit transducteur provoque la vibration de la sonotrode à une fréquence comprise entre 20 kHz et 40 kHz. On obtient de la sorte une qualité de découpe optimale du matériau synthétique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle de face montrant une installation de découpe conforme à l'invention;
- la Figure 2 est une vue schématique de détail de l'installation représentée sur la Figure 1, dans un mode en fonctionnement ; et,
- la Figure 3 est une vue schématique de dessous selon la flèche III d'un élément de l'installation illustré sur la Figure 1;

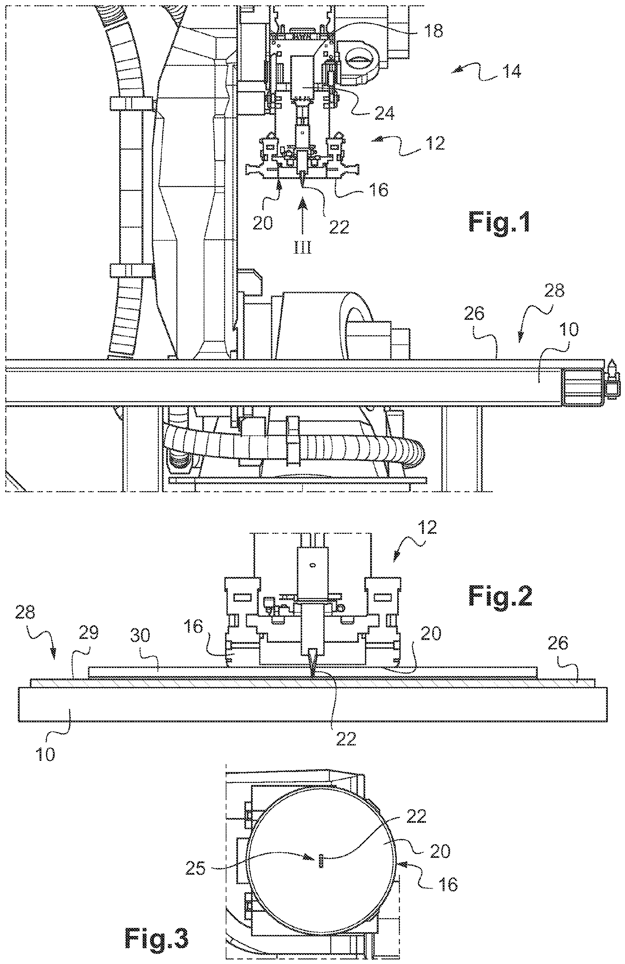

La Figure 1 illustre de face un support plan 10, et une tête de découpe 12 portée par un robot 14 adapté à venir se mouvoir au-dessus du support plan 10. La tête de découpe 12 comporte un sabot 16 monté sur un dernier bras, ou bras distal 18 du robot 14. Le sabot 16 réalisé dans un matériau métallique, et plus précisément en acier, présente une surface d'appui plane 20 glissante et une lame 22 montée sur une sonotrode venant s'étendre en saillie de la surface d'appui glissante 20. La surface d'appui 20 est rendue tout particulièrement glissante grâce à un traitement de surface. Il s'agit d'un traitement visant à durcir la surface et à en éliminer les aspérités. Par exemple, l'acier est de type Z160CDV12, Il subit une trempe puis est poli miroir, pour subir ensuite un traitement lonbond 90.

On se reportera sur la Figure 3, montrant la surface d'appui 20 du sabot 16, avant de revenir à la Figure 1. Elle est de symétrie circulaire et la lame 22 vient s'en étendre en saillie au centre 25.

La lame 22 s'étend dans le prolongement d'un transducteur 24 installé en amont de la tête de découpe 12 vers le bras distal 18. Le transducteur 24 provoque alors la vibration de la lame 22 à une fréquence de 30 kHz.

Grâce au robot 14, la tête de découpe 12 est mobile, non seulement selon une composante verticale, mais aussi selon des composantes horizontales comme on l'expliquera plus en détail ci-après.

Le support plan 10 est recouvert d'un revêtement adhérent 26, fait d'un matériau élastomère en silicone, et ils forment ainsi une table de travail 28. Par exemple, on mettra en oeuvre un revêtement en polyuréthane d'une épaisseur de 5 mm et d'une dureté shore A de 90. Le revêtement adhérent 26 est par exemple solidarisé au support plan 10 au moyen d'un adhésif, et ils présentent une surface libre de réception 29.

On se reportera sur la Figure 2 pour décrire plus en détail le mode de fonctionnement de la tête de découpe 12 vis-à-vis de la table de travail 10 et du revêtement adhérent 26.

On retrouve sur la Figure 2, la table de travail 28 et la tête de découpe 12. On y retrouve également le revêtement adhérent 26 et le support plan 10 formant ensemble la table de travail 28.

Entre la tête de découpe 12 et la table de travail 28, est installée à plat une couche mince 30 de matériau composite. Cette couche mince 30 est en prise entre la surface d'appui 20 du sabot 16 et la surface libre de réception 29 du revêtement adhérent 26. Le matériau composite dont est faite la couche mince 30 est par exemple réalisé dans une matrice en polyamide, polyamide 6,6, renforcée par des fibres de verre longitudinales. L'avantage d'un tel matériau composite réside dans la mise en oeuvre d'une matrice thermoplastique.

Ainsi, grâce à la pression de la tête de découpe 12 sur la couche mince 30, cette dernière va pouvoir adhérer au revêtement adhérent 26. En effet, il s'exerce, entre la couche mince 30 et le revêtement adhérent 26, des forces de frottement se décomposant en une composante normale à l'interface, qui vient presser la couche mince 30 contre le revêtement adhérent 26, et une composante tangentielle qui s'oppose au glissement des deux l'une contre l'autre. Or, grâce au coefficient de frottement statique entre la couche mince 30 et le revêtement adhérent 26, lequel est relativement élevé, la composante tangentielle des forces de frottement n'atteint pas la valeur de seuil au-delà de laquelle la couche mince 30 de matériau composite serait entraînée en glissement contre le revêtement adhérent 26. Ce coefficient de frottement statique entre la couche mince 30 et le revêtement adhérent 26, pour un matériau composite donné, dépend de la nature du revêtement adhérent 26 et de son état de surface. Grâce au choix du matériau élastomère, on obtient un coefficient de frottement statique relativement élevé.

On observera que la pression de la tête de découpe 12 sur la couche mince 30 est avantageusement comprise entre 20 daN et 50 daN. Cette pression est par exemple de 40 daN rapportée à une surface de 28 340 mm² de la surface d'appui 20 du sabot 16, Soit environ 14,1 kPa.

La composante tangentielle des forces de frottement n'atteint pas la valeur de seuil précité, au-delà de laquelle la couche mince 30 de matériau composite pourrait être entraînée en glissement contre le revêtement adhérent 26, car, à l'interface entre la surface d'appui 20 du sabot 16 et la couche mince 30 de matériau composite, le coefficient de frottement dynamique est relativement faible, et est inférieur au coefficient de frottement statique précité. Aussi, grâce à l'état de la surface d'appui 20 du sabot 16, la valeur de seuil de la composante tangentielle des forces de frottement entre la surface d'appui 20 et la couche mince 30 est fortement abaissée, et la composante tangentielle est alors bien supérieure, de sorte que les forces de frottement entre le sabot 16 et la couche mince 30 sont relativement faibles.

De la sorte, la lame 22 qui vient traverser la couche mince 30 de matériau composite va pouvoir être entraînée en mouvement selon des trajectoires prédéfinies en entraînant en mouvement la tête de découpe 12 selon un plan parallèle au support plan 10, tandis que la couche mince 30 de matériau composite est maintenue en position fixe par rapport à la table de travail 28. Par là même, la lame 22, mise en vibration, provoque la découpe de la couche mince 30 de matériau composite.

De plus, ce couplage des ultrasons avec une lame de découpe permet de minimiser l'effort de coupe, et ainsi de limiter le risque de glissement du produit à découper.

Le robot 14 est contrôlé par un programme de commande non représenté, permettant de commander la tête de découpe 12 selon une pluralité de trajectoires permettant ainsi de découper une pluralité de pièces de matériau composite selon des formes prédéfinies.

De telles pièces de matériau composite pourront ensuite être assemblées pour pouvoir être thermoformées.

## Revendications

1. Installation de découpe de couche mince de matériau synthétique, ladite installation comprenant, d'une part une table de travail (28) pour recevoir une couche mince (30) de matériau synthétique et d'autre part une tête de découpe (12) comprenant un sabot (16) présentant une surface d'appui (20) glissante et un organe de découpe (22) apte à venir s'étendre en saillie de ladite surface d'appui (20) glissante, ladite surface d'appui glissante étant destinée à être appliquée contre ladite couche mince (30) de matériau synthétique, tandis que ledit sabot (16) est entraîné en mouvement sensiblement parallèlement à ladite table de travail (28) selon des trajectoires prédéfinies pour pouvoir découper ladite couche mince (30) de matériau synthétique ;
**caractérisée en ce que** ledit organe de découpe comprend une sonotrode (22) et un transducteur (24),
et **en ce que** ladite table de travail (28) comporte un revêtement adhérent (26) réalisé dans un élastomère présentant un coefficient de frottement statique vis-à-vis dudit matériau synthétique, tandis que ledit sabot (16) est réalisé dans un matériau métallique et ladite surface d'appui est traitée de manière à être plane et dépourvue d'aspérité, ladite surface d'appui (20) glissante présentant un coefficient de frottement dynamique vis-à-vis dudit matériau synthétique, inférieur audit coefficient de frottement statique, pour pouvoir maintenir ladite couche (30) de matériau synthétique en position fixe contre ladite table de travail (28) lorsque ledit sabot (16) est entraîné en glissement sur ladite couche (30) de matériau synthétique.

2. Installation de découpe selon la revendication 1, **caractérisé en ce que** ladite surface d'appui (20) glissante est destinée à être appliquée contre ladite couche mince (30) de matériau synthétique avec une pression comprise entre 7000 Pa et 18000 Pa.

3. Installation de découpe selon la revendication 1 ou 2, **caractérisée en ce que** ladite couche mince (30) de matériau synthétique est une couche de matériau composite.

4. Installation de découpe selon l'une quelconque des revendications 1 à 3, **caractérisée en ce qu'**elle comprend en outre un dispositif de commande pour commander en mouvement ladite tête de découpe (12).

5. Installation de découpe selon la revendication 4, **caractérisée en ce que** ledit dispositif de commande comporte un robot (14) présentant un bras distal (18) portant ladite tête de découpe (12).

6. Installation de découpe selon l'une quelconque des revendications 1 à 5, **caractérisée en ce que** ladite surface d'appui (20) glissante est de symétrie circulaire, tandis que ledit organe de découpe (22) vient s'étendre en saillie au centre de ladite surface d'appui (20) glissante.

7. Installation de découpe selon l'une quelconque des revendications 1 à 6, **caractérisée en ce que** ledit transducteur (24) provoque la vibration de la sonotrode (22) à une fréquence comprise entre 20 kHz et 40 kHz.

## Patentansprüche

1. Schneidanlage für dünne Schichten aus synthetischem Material, wobei die Anlage einerseits einen Arbeitstisch (28) zum Aufnehmen einer dünnen Schicht (30) aus synthetischem Material und andererseits einen Schneidkopf (12) umfasst, der einen Schuh (16), welcher eine Gleitauflagefläche (20) aufweist, und ein Schneidorgan (22) umfasst, das in der Lage ist, sich von der Gleitauflagefläche (20) vorspringend zu erstrecken, wobei die Gleitauflagefläche dazu bestimmt ist, auf die dünne Schicht (30) aus synthetischem Material gedrückt zu werden, während der Schuh (16) im Wesentlichen parallel zum Arbeitstisch (28) entlang vordefinierter Trajektorien in Bewegung versetzt wird, um die dünne Schicht (30) aus synthetischem Material schneiden zu können;
**dadurch gekennzeichnet, dass** das Schneidorgan eine Sonotrode (22) und einen Wandler (24) umfasst,
und dadurch, dass der Arbeitstisch (28) eine Haftbeschichtung (26) umfasst, die aus einem Elastomer hergestellt ist, das einen statischen Reibungskoeffizienten gegenüber dem synthetischen Material aufweist, während der Schuh (16) aus einem Metallmaterial hergestellt ist und die Auflagefläche so behandelt ist, dass sie eben und frei von Unebenheiten ist, wobei die Gleitauflagefläche (20) einen dynamischen Reibungskoeffizienten gegenüber dem synthetischen Material aufweist, der kleiner ist als der statische Reibungskoeffizient, um die Schicht (30) aus synthetischem Material in fester Position am Arbeitstisch (28) halten zu können, wenn der Schuh (16) auf der Schicht (30) aus synthetischem Material in Gleitbewegung versetzt wird.

2. Schneidanlage nach Anspruch 1, **dadurch gekennzeichnet, dass** die Gleitauflagefläche (20) dazu bestimmt ist, mit einem Druck im Bereich zwischen 7000 Pa und 18000 Pa auf die dünne Schicht (30) aus synthetischem Material gedrückt zu werden.

3. Schneidanlage nach Anspruch 1 oder 2, **dadurch gekennzeichnet, dass** die dünne Schicht (30) aus synthetischem Material eine Schicht aus Verbundmaterial ist.

4. Schneidanlage nach einem der Ansprüche 1 bis 3, **dadurch gekennzeichnet, dass** sie weiter eine Steuervorrichtung zur Bewegungssteuerung des Schneidkopfes (12) umfasst.

5. Schneidanlage nach Anspruch 4, **dadurch gekennzeichnet, dass** die Steuervorrichtung einen Roboter (14) umfasst, der einen distalen Arm (18) aufweist, der den Schneidkopf (12) trägt.

6. Schneidanlage nach einem der Ansprüche 1 bis 5, **dadurch gekennzeichnet, dass** die Gleitauflagefläche (20) Kreissymmetrie aufweist, während das Schneidorgan (22) sich in der Mitte der Gleitauflagefläche (20) vorspringend erstreckt.

7. Schneidanlage nach einem der Ansprüche 1 bis 6, **dadurch gekennzeichnet, dass** der Wandler (24) die Vibration der Sonotrode (22) mit einer Frequenz im Bereich zwischen 20 kHz und 40 kHz bewirkt.

## Claims

1. An installation for cutting a thin layer of synthetic material, said installation comprising, on the one hand a work table (28) for receiving a thin layer (30) of synthetic material and on the other hand a cutting head (12) comprising a shoe (16) having a sliding bearing surface (20) and a cutting member (22) capable of extending projecting from said sliding bearing surface (20), said sliding bearing surface being intended to be applied against said thin layer (30) of synthetic material, while said shoe (16) is moved substantially parallel to said work table (28) according to predefined trajectories to be able to cut said thin layer (30) of synthetic material;
**characterised in that** said cutting member comprises a sonotrode (22) and a transducer (24),
and **in that** said work table (28) includes an adherent coating (26) made from an elastomer having a coefficient of static friction with respect to said synthetic material, while said shoe (16) is made from a metal material and said bearing surface is treated so as to be flat and devoid of roughness, said sliding bearing surface (20) having a coefficient of dynamic friction with respect to said synthetic material, lower than said coefficient of static friction, to be able to maintain said layer (30) of synthetic material in a fixed position against said work table (28) when said shoe (16) is caused to slide on said layer (30) of synthetic material.

2. The cutting installation according to claim 1, **characterised in that** said sliding bearing surface (20) is intended to be applied against said thin layer (30) of synthetic material with a pressure comprised between 7000 Pa and 18000 Pa.

3. The cutting installation according to claim 1 or 2, **characterised in that** said thin layer (30) of synthetic material is a layer of composite material.

4. The cutting installation according to any one of claims 1 to 3, **characterised in that** it further comprises a control device for controlling the movement of said cutting head (12).

5. The cutting installation according to claim 4, **characterised in that** said control device includes a robot (14) having a distal arm (18) carrying said cutting head (12).

6. The cutting installation according to any one of claims 1 to 5, **characterised in that** said sliding bearing surface (20) is of circular symmetry, while said cutting member (22) extends projecting at the centre of said sliding bearing surface (20).

7. The cutting installation according to any one of claims 1 to 6, **characterised in that** said transducer (24) causes the vibration of the sonotrode (22) at a frequency comprised between 20 kHz and 40 kHz.
